# EUROPEAN PATENT SPECIFICATION

(11) **EP 0 822 751 B1**
(45) Date of publication and mention of the grant of the patent: **24.07.2002**
(21) Application number: 97903213.3
(22) Date of filing: 19.02.1997
(51) Int. Cl.: A22B 5/20, A22C 17/04, A22B 3/10

(54) **TOOL, KNIFE, AND METHOD FOR AUTOMATIC CUTTING ALONG SPINOUS PROCESSES IN A CARCASS OR PART OF A CARCASS**
GERÄT, MESSER UND VERFAHREN ZUM SCHNEIDEN ENTLANG SPINALENFORTSÄTZEN IN EINER KARKASSE ODER KARKASSENTEIL
OUTIL, COUTEAU ET PROCEDE POUR COUPER AUTOMATIQUEMENT LE LONG DE L'APOPHYSE EPINEUSE DANS UNE CARCASSE OU DANS UNE PARTIE DE CARCASSE

(30) Priority: 20.02.1996 DK 18096
(43) Date of publication of application: 11.02.1998
(73) Proprietor: Slagteriernes Forskningsinstitut, 4000 Roskilde (DK)
(72) Inventor: POST, Erling, DK-4000 Roskilde (DK); SASSEROD, Michael, DK-2000 Frederiksberg (DK); ZINK, Jorgen, DK-2670 Greve Strand (DK)
(74) Representative: Bayliss, Geoffrey Cyril
(86) International application number: DK9700074
(87) International publication number: WO9730594

(56) References cited:
- EP-A- 0 392 874
- AU-B- 592 614
- DK-B- 140 452
- DK-B- 167 044
- DK-B- 168 554

## Description

The present invention relates to a tool for automatic cutting along spinous processes in a carcass or part of a carcass, comprising two knives placed at a distance to each other, said knives having a fixing part for mounting the knives on a knife holder or a console in a machine, and a free cutting part for cutting along the spinous processes.

After slaughter of animals, such as pigs or cattle, the carcass is separated directly into two halves in a splitting operation. The halves are then divided into cuts, and for some markets the split spinal coloumn is removed manually. This requires skilled operators and a substantial portion of meat is left on the bones.

Another known operation comprises separation of the spinous processes of the carcass from the loins and neck muscles at said processes before the splitting operation. First the rind and the fat layer are pre-scored in the symmetry plane of the carcass, e.g. a pig carcass. There may be cut as far as the peaks of the spinous processes. The short spinous processes are then cut free on both sides in the lumbar area of the carcass. A pair of blunt horns are thereafter pressed in between the long spinous processes and the adjoining loins, and the horns are moved down along the spinal column to the neck of the carcass, separating the muscles from the bones. This separation process is called back-finning. The carcass is then split through the middle by means of a saw. In a subsequent operation the split spinal column with the exposed spinous processes is cut off. In this so-called rib-top sawing the operator moves a circular saw in the longitudinal direction of the spinal column and makes an oblique cut through the inner part of the ribs. In this way middles and loins without spinous processes and spinal column are obtained. The meat cuts still have ribs and intact membranes which has to bee removed manually if required by the market. A machine for automatic pre-scoring, free-cutting and back-finning is described in DK 167044 B1 (SFK, Slagteriernes Fællesindkøbsforening a.m.b.a.).

EP 0 392 874 A2 (The Meat Industry Research Institute of New Zealand) describes a tool for automatic cutting along spinous processes and ribs in a carcass in order to separate fillet and bones. The tool comprises a cutting device having a plough-like shape. The tool is provided with two parallel knives to be moved along on either side of the spinous processes, and it is designed with wings that protrude from either of the knives, to cut along the ribs of the back. Much meat is lost by use of the tool, which is unacceptable for European production processes.

In order to improve the traditional back-finning process the present applicant has made tests with a special cutting method for cutting the spinous processes free. The traditional tool with finning horns was replaced by a tool having two circular knives which were moved along on either side of the spinous processes of the carcass. By this so-called free-cutting process, loins and neck muscles were separated from the long spinous processes by a cutting operation that leaves the bone membranes on the spinous processes. This is an advantage for products aimed at markets demanding meat cuts with trimmed-off membranes. However, it has been difficult to achieve a satisfactory cutting performance with the circular knives being used so far. There is a risk that the knives will leave the line of spinous processes, or the knives will not cut close enough to the spinous processes, leaving too much meat on these.

The purpose of the present invention is to provide a tool for automatic cutting along spinous processes, by which the knives arc less likely to leave the line of spinous processes, but still they are able to cut close to the spinous processes, so that only small quantities of meat are lost.

This is accomplished by the tool of the invention, having the cutting part of the knives having a cutting edge along a first edge of the knives and a tapering free end part with a second edge, characterised in that the tapering free end part of each knife has a rounded point connecting the first edge and the second edge of the knife, said point having a cutting edge (7) which is integrated with the first cutting edge (6), and in that the first edge is at an angle to a section of the second edge which guides the knife along a bone surface during the cutting operation so that the knife assumes an inclined position in relation to the bone surface when said section guides along the bone surface during the cutting operation with the point of the tapering free end part in front and with the section of the first edge nearest to said point being closest to the bone surface.

The invention is based upon the observation that it is important to "start" the free-cutting procedure near the bottom area of the spinous processes, where the spinous processes form the straightest line and where they are therefore the least likely to make the knives leave the line or to force them into paths that will leave much meat remaining on the spinous processes. This effect is achieved by moving the tool of the invention along the spinous processes with said knives on cither side of the line of spinous processes with the cutting edge of the knives in the forward direction of movement of the knives and with the points of the knives at the front. The design of the present tool having knives with a tapering free end part with a second edge makes it possible to move the knives in an inclined position with the point of the tapering free end part at front while a section of the second edge guides the knives on a bone surface of the spinal column. The cutting edge along the first edge of the knives will thus pass the long spinal processes from the bottom upwards pressing skew positioned processes to a more upright position. This will ensure that the knives during the entire cutting process will glide along the bottom area of the spinous processes making a cut along and dose to said spinous processes.

The two knives of the tool will thus cut simultaneously on either side of the spinous processes, tracking jointly on the line of spinous processes.

The two knives of the tool may be substantially parallel to each other. They are preferably firmly mounted on a knife holder or a console, so that the three parts form a firm unit without elasticity between the parts.

Preferably, the knives are substantially designed as mirror images of each other. This will ensure a high yield of meat and a good tracking of the knives of the tool. The knives can be placed at a distance from each other of between 5 and 14 mm, preferably between 6 and 10 mm, and the side of the knives that faces each other is preferably plane and parallel to each other, at least on the half that is closest to the first cutting edge. This will provide a cut close to the spinous processes.

The second cutting edge is preferably located on the other side of the tapering free end part of the knife. The second cutting edge serves to glide along a bone surface, preferably the bottom area of the spinous processes. The second cutting edge can cut sinews, membranes and meat that are located in vicinity to the bottom area of the spinous processes when the knife is moved along the spinous processes with the cutting edge mentioned in contact with the spinal column or the bottom area of the spinous processes.

The second cutting edge of the knives may be curved with a radius of curvature that is larger than 50 mm. When the knives of the tool are moved with the second cutting edge substantially parallel with the bone surface of the spinal column, the edges act as a type of depth stop that ensures that the knives do not run down into the gaps between the vertebras of the spinal column, but can be moved in a substantially uniform movement along the spinous processes. If the cutting edge mentioned has a large radius of curvature, the knives can cut slightly down into the gaps between the vertebras without causing the necessary power of forward movement to be changed significantly.

The tapering free end part of each knife is preferably designed with a rounded point connecting the first edge and the second edge of the knife, said point having a cutting edge. Seen from one of the broad sides of the knife the radius of curvature of the rounded point may be larger than 10 mm. In this way the free end of the knife is prevented from catching the bone surface.

The first cutting edge, the cutting edge of the rounded point and the second cutting edge are preferably integrated with each other. In this embodiment all of the edges mentioned will contribute to the free-cutting operation.

As mentioned, it is important that the free-cutting operation is started at the bottom area of the spinous processes. Preferably this is accomplished by use of a tool having knives which are characterized in that the angle between the first edge and the second edge or a tangent to the middle section of said edge is larger than 30° and smaller than 60°. When the second edge rests against the bone surface of the spinal column over a fairly long distance (is substantially parallel with the bone surface), the free-cutting operation by this embodiment will automatically start at the bottom area of the spinous processes. The risk of leaving the line of spinous processes or cutting at a large distance to the spinous processes will therefore be very small.

The tool of the invention may comprise knives which are substantially plane on one side in the half closest to the first cutting edge. During the free-cutting operation this will make it easier for the cutting edge to cut close to the spinous processes, which reduces the loss of meat, and at the same time a tracking of the knives is accomplished by the spinous processes, which have already been cut free. The knives can be plane on the entire one side that faces the spinous processes, but preferably they form another plane on that half furthest away from the first cutting edge, so that the planes form an inter-angle that is larger than 170° and smaller than 180°. The friction between spinous processes and knives is reduced when the distance between knives and bones is thus increased on the back edge of the knives, without sacrificing the tracking of the knives.

Some of the spinous processes, which are to be cut free, have small projections of cartilage or bone. The knives shall either be able to cut through these projections, which may cause heavy wear and an uneven power of the forward movement, or the knives must be moved forward at a certain distance from the spinous processes, which will increase the loss of meat. However, it has proved that the most inconvenient projections are at a relatively constant distance from the bottom area of the spinous processes of between 65 and 85 mm (on pig carcasses). Both of the mentioned disadvantages can therefore be avoided by a special embodiment of the tool, which is characterized in that the knives at a distance of between 50 and 100 mm from the second edge are provided with a rectilinear groove. By this design it is possible to cut close to the spinous processes in the areas that are located outside the projections, and at the same time cutting into hard bone parts are avoided, which parts otherwise could hamper the forward movement of the knives. The groove is preferably designed with a width of between 5 and 50 mm, and a depth of between 0.5 and 3 mm.

Furthermore, it has proved that the properties wanted from the knife as to tracking and a minimum loss of meat are best met by using a tool having extremely stiff knife blades. The knives used in the tool of the invention are therefore preferably provided with a cutting part that has a thickness of 6 mm or more, preferably a thickness of 10 to 14 mm.

The knives guide preferably on several spinous processes simultaneously. On the other hand the tool should be capable of following fairly large curvatures in the line of spinous processes, too. The cutting part of the knives of the tool is therefore preferably oblong and with a width of 50 mm or more, and a length of 100 mm or more, measured from the free end part.

The tool of the invention is suitable for cutting along the long spinous processes and the short spinous processes. There are heavy sinews on the latter, which by the hitherto known methods arc difficult to cut through in the same operation as the free-cutting of the long spinous processes. The tool of the invention is advantageous in that it is able to cut free the long spinous processes in immediate continuation of the free-cutting of the short spinous processes.

The tool of the invention is especially designed with a view to being used in a machine for automatic free-cutting of spinous processes (particularly both long and short spinous processes), the free-cutting operation being "started" from the bottom area of the spinous processes, where the spinous processes are closest to forming a straight line.

The second cutting edge is preferably located on the other side of the tapering free end part

The invention also relates to a knife which is specially designed for automatic cutting along spinous processes in a carcass or part of a carcass. The knife is of the type comprising a fixing part for mounting of the knife on a knife holder or a console in a machine, and a free cutting part for cutting along the spinous processes, said cutting part of the knife having a cutting edge along a first edge of the knife and a tapering free end with a second edge. The knife of the invention is characterised in that the tapering free end part has a rounded point connecting the first edge and the second edge, said point having a cutting edge (7) which is integrated with the first cutting edge (6), and in that the first edge is at an angle to a section of the second edge which guides the knife along a bone surface during the cutting operation so that the knife assumes an inclined position in relation to the bone surface when said section guides along the bone surface during the cutting operation with the point of the tapering free end part in front and with the section of the first edge nearest to said point being closest to the bone surface.

When used for free-cutting of the spinous processes of a carcass or part of a carcass the knife of the invention is less likely to leave the line of spinous processes than knives known in the art, and still the knife is able to cut close to the spinous processes, so that only small quantities of meat are lost in the operation.

The preferred embodiment of the knife of the invention is stated in Claim 9.

The invention also relates to a method for automatic cutting along spinous processes of a carcass or part of a carcass by means of a tool having two knives placed at a distance to each other. Said two knives each comprise a fixing part for mounting of the knife on a knife holder or a console in a machine and a free cutting part designed with a cutting edge along a first edge of the knife and having a tapering free end part with a second edge, whereby the tool is moved with said knives on either side of a line of spinous processes, characterised in that the tool is moved with the knives in an inclined position with a section of the second edge guiding along a bone surface, with the point of the tapering free end part in front and with the section of the first edge nearest to said point being closest to the bone surface and the section of the first edge furthest from the point being furthest from the bone surface.

The method of the invention may be performed by means of a tool comprising two knives having a second cutting edge along the second edge of the knife, the tool being moved, so that the line which can be drawn in or as a tangent to the middle section of the second cutting edge of the knife is substantially parallel to the spinal column of the carcass or part of the carcass. Thus, the power needed to move the knives along the spinous processes is small and nevertheless the knives will cut close to the bone.

The machine used for the cutting operation can be adapted to stop if the power of the forward movement exceeds a pre-determined threshold value, e.g. if a knife should hit spinous processes standing very askew. In this way the knives are prevented from leaving the line, and consequently damage to the loins is avoided.

A preferred embodiment of the method of the invention is characterized in that the tool - comprising two knives each having an angle between the first edge and the second edge or a tangent to the middle section of said edge which is lager than 30° and smaller than 60° - is moved with the knives in an inclined position so that the second edge of each knife or a tangent to the middle section of said edge is substantially parallel to the longitudinal direction of the spinal column.

The tool with the knives may be moved from the tail area of the carcass to the neck area cutting on both sides of the spinous processes substantially in the full length of the spinal column.

Thus, only one operation may be required for separation of the muscles from the spinous processes, where the known finning process requires three different tools and operations, i.e. free-cutting of short spinous processes, free-cutting of long spinous processes and back-finning.

A preferred embodiment of the method of the invention is characterized in that the tool - comprising two knives each having a second cutting edge along the second edge - is moved substantially at right angles to the spinal column of the carcass until it stops when the second cutting edge hits the spinal column, and in that the knives are pressed against the spinal column while the tool is moved along the spinal column during the cutting operation along the spinous processes.

As mentioned, the splitting operation of a known method may for some markets be performed directly on the carcass (without separation of the muscles from the spinous processes). However, when the present cutting method is applied prior to the splitting operation damage to the loins and neck muscles is avoided in the splitting operation. Furthermore, the subsequent manual boning of the split carcass or part thereof becomes easier for the operator. A higher yield is obtained.

The following description mentions some of the advantages achieved by the present free-cutting operation, in relation to traditional, manual back-finning, namely:
- higher yield of loins on which the membranes of the spinous processes must be trimmed,
- higher efficiency on the slaughterline or the boning line,
- the heavy sinew in the passage between the short and the long spinous processes remains on the spinous processes and therefore it shall not be trimmed off during the boning process,
- there are no remains of cartilage capsules from the sixth chest spinous process and backwards,
- automatic free-cutting is uniform and right to the bottom all the way down, so that the yield loss, which occurs when rib-top sawing loins are insufficiently back-finned, is avoided,
- automatic free-cutting can stop at the transition between loins and neck, giving a suitable product for the European market,
- automatic free-cutting removes some of the more difficult jobs, so that job rotation and training of new staff get easier,
- automatic free-cutting is closer to the short spinous processes than manual free-cutting resulting in a higher yield of lumbar meat, and
- the finished products look excellent.

The invention is described in further detail in the following, with reference to the drawings in which
- Fig. 1 is a side view of an embodiment of a tool according to the invention for free-cutting of spinous processes of a carcass or part of a carcass,
- Fig. 2 is an end elevation in the view of arrow "a" of Fig. 1,
- Fig. 3 is a side view of a knife used in the tool, seen from one side,
- Fig. 4 is a side view of the knife of Fig. 3, seen from the opposite side,
- Fig. 5 is a sectional view on the line A-A of Fig. 3, and
- Fig. 6 shows the position of the knife during free-cutting of spinous processes.

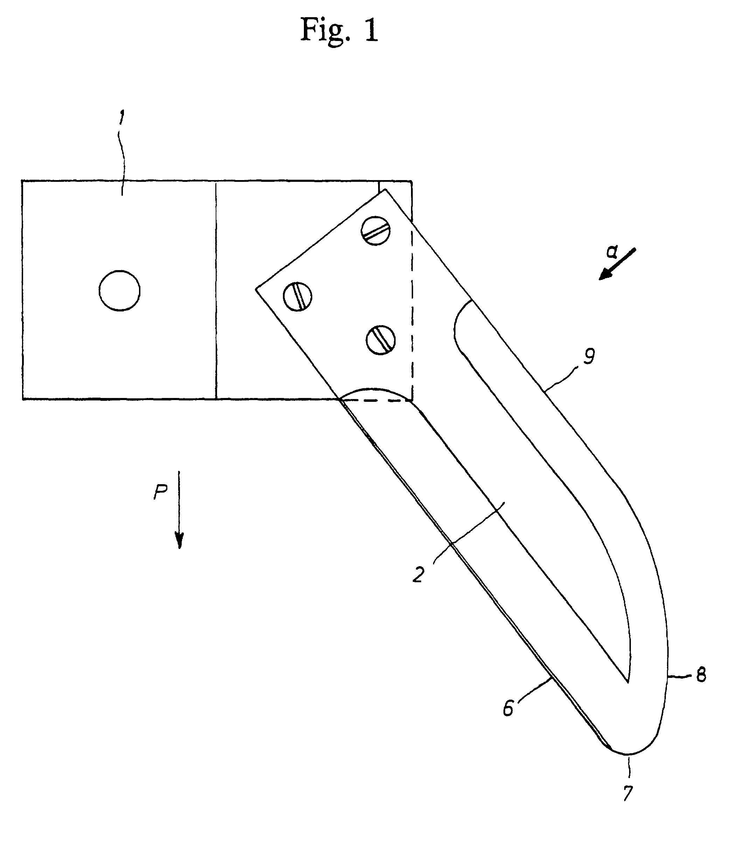

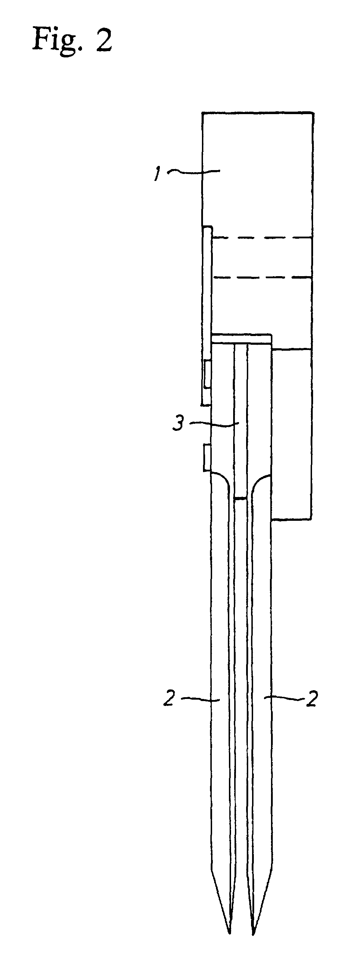

The tool of Fig. 1 and 2 comprises a block 1 serving as a knife holder or a console. Two knives 2 are fixed to the block by means of bolts or similar. Between the knives are placed a plate 3 providing space between the knives (Fig. 2), the knives being fixed in a parallel relationship at a distance to each other of e.g. 8 to 9 mm. The block 1 is fixed on a carriage of a machine for pre-scoring and free-cutting (not shown).

Alternatively, the knife holder or console may comprise an 8 to 9 mm thick flat bar with holes corresponding to the holes of the knives, the knives being placed on either side of the flat bar firmly fixed to the bar by means of bolts or similar. The flat bar is fixed on the carriage of the machine.

The machine may be of the type described in DK 167044 B1 with a vertically movable carriage provided with horizontal cylinder units each carrying a tool. The fixture for a pig or cattle carcass to be processed in the machine may be of the type described in DK 171036 B1/EP 0 696 172 B1 (Danfotech/Siagteriernes Forskningsinstitut). Of the four tools shown in the drawings of DK 167044 B1 only the one that performs a pre-scoring through the rind and layer of fat of the carcass is used. One of the vacant cylinder units is used for the free-cutting of this invention, the tool (i.e. the console with the two knives) being mounted on the free end of the piston rod of the cylinder.

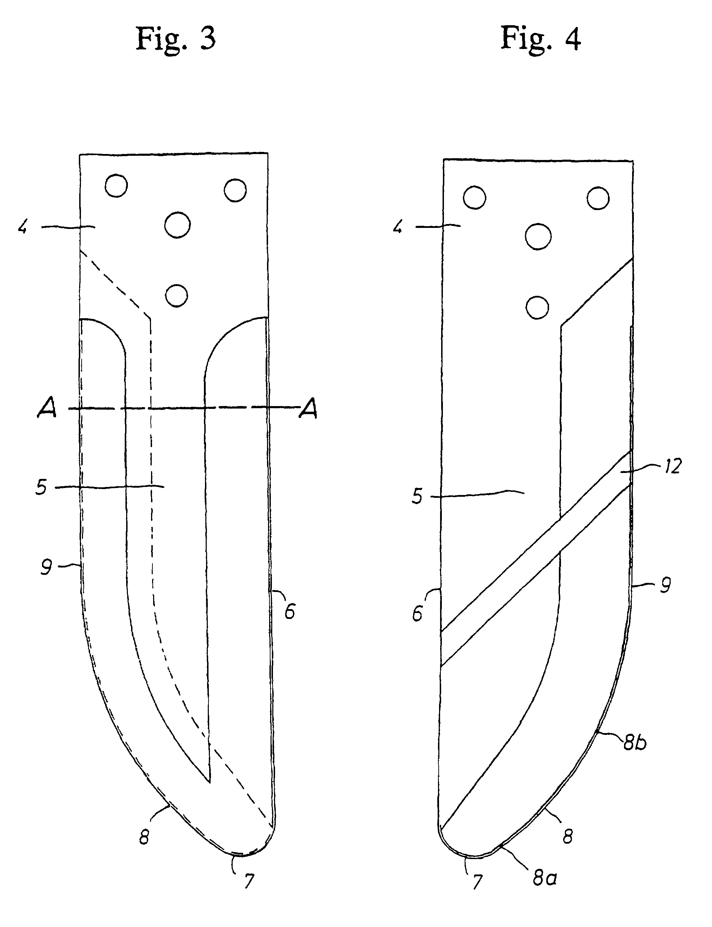

The knife of Fig. 3, 4 and 5 is designed as a knife blade having a 10 to 14 mm thick fixing part 4 with mounting holes for through bolts. It also comprises a cutting part 5, which is integrated with the fixing part. The cutting part has a first rectilinear cutting edge 6, a rounded point with a cutting edge 7, and a curved, second cutting edge 8 which extends from point 8a to point 8b of Fig. 4 on the tapering end part of the cutting part 5. The cutting edge 8 continues into a third cutting edge 9. The cutting edge 7 of the rounded point is integrated with the cutting edges 6 and 8. The angle between the rectilinear cutting edge 6 and a tangent to the middle section of the cutting edge 8 is in the rage of 30° to 60°.

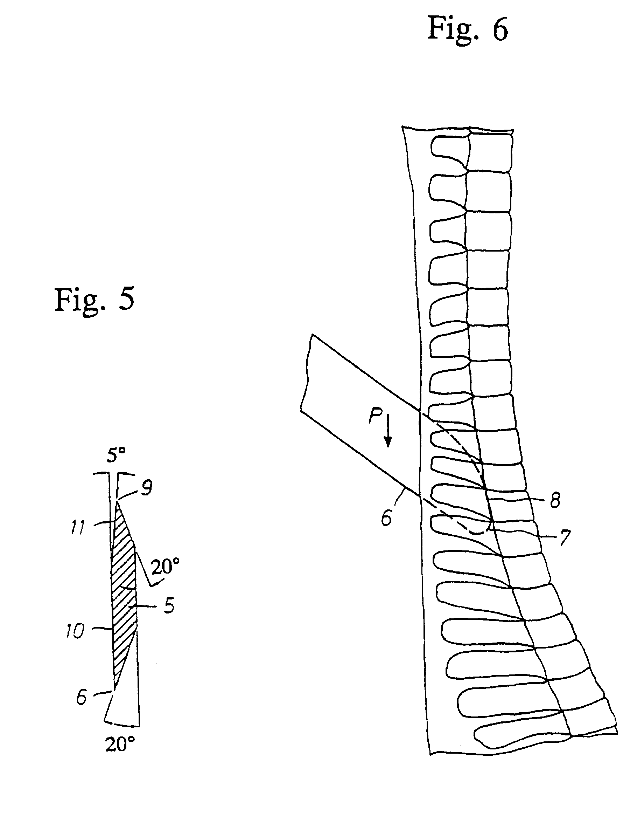

The cutting part 5 is of the same thickness as the fixing part 4. As is seen from Fig. 5 one side of the knife has a plane surface 10 on the half that is closest to the cutting edge 6, whereas the rest of the side forms another plane surface 11. The two plane surfaces form an inter-angle of 175°. The cutting edge 6 is bevelled on the side that is opposite the plane surface, whereas the cutting edges 7, 8 and 9 are bevelled on the plane side. A 1.5 mm deep and 27 mm wide, rounded groove 12 is milled in one side of the knife, so that the knife avoids to cut into bone parts that protrude from the sides of the spinous processes. The knife is made of hard stainless steel. The cutting edges of the knife may be hardened or made of a hard material, such as a ceramic material. Bits may be provided on a cutting edge, such as on the cutting edge 6.

In the tool of Fig. 1 and 2 two knives are used. They are designed as mirror images of each other.

The pre-scoring and free-cutting operations comprise the following working procedures:

After evisceration the carcass is conveyed into a measuring station, in which the height of the snout and the pubic bone above the floor is measured automatically. Then the carcass is conveyed into a fixture of the type described in DK 171036 B1/EP 0 696 172 B1, in which a hook is inserted into a cut opening in the jawbone and the pelvic region of the carcass is caught by two hooks. Furthermore, some stop devices and support plates are placed in the cavity of the carcass to engage the inside of the spinal column, after which the carcass is stretched by the jaw hook being pulled downwards automatically. The carcass is now fixed and brought into position in front of the pre-scoring and free-cutting tools of the machine.

The carriage with the two tools is moved downwards in the direction of arrow P (Fig. 1 and 6). When the pre-scoring tool is at the height of the tail of the carcass, the cylinder of the tool will be activated, so that the circular knife enters the carcass and starts cutting through rind and fat layer. The cutting depth is determined by the two rollers which run on the outside of the carcass and which are placed on either side of the circular knife. When the free-cutting tool is subsequently at the height of the tail area, the cylinder of the free-cutting tool will be activated, so that the two knives cut into the carcass on either side of the short spinous processes in the tail area until they rest against the bone surface of the bottom area of the spinous processes or the spinal column. The height at which the cylinder is activated is determined by means of the levels measured of the snout and the pubic bone.

The carriage will continue its movement downwards, and during this movement the circular knife will pre-score, and the two fixed knives of the present tool will free-cut. The free-cutting "starts" near the bottom area of the spinous processes, the knives being moved along the spinal column in the inclined position, which appears from Fig. 6 with the cutting edge 7 of the point at the front in the direction of movement. The arrow P (or the longitudinal direction of the spinal column) and the cutting edge 6 of the knives form an acute angle which is preferably smaller than 60°. Preferably, the angle is in the range of 25° to 45°. A substantial part of cutting edge 8 rests on the bone surface of the spinal column or bottom area of the spinous processes. This means that the cutting edge 8 guides the tool along said surfaces, whereas the flat side of the knives keeps the knives on track in relation first to the short spinous processes and then to the long spinous processes.

When the carriage has moved the circular knife down to the neck area of the carcass, the circular knife will be pulled back by means of the cylinder. Immediately thereafter, the free-cutting knives will also arrive at the neck area, and they will also be pulled back by means of their cylinder. The height of deactivation of the tools is determined by means of the levels measured of the snout and the pubic bone. The pre-scoring and the free-cutting operations have now been completed, and the carcass can be released and carried further on to the other operations including splitting and rib-top sawing.

Because of the special design of the tool of this invention the cutting will be close to the spinous processes and in a well-defined track. Therefore, the tool makes it possible to perform a fully automatic free-cutting operation.

## Claims

1. Tool for automatic cutting along spinous processes in a carcass or part of a carcass, comprising two knives (2) placed at a distance to each other, said knives having a fixing part (4) for mounting the knives on a knife holder (1,3) or a console in a machine, and a free cutting part (5) for cutting along the spinous processes, said cutting part of the knives having a cutting edge (6) along a first edge of the knives and a tapering free end part with a second edge, **characterised in that** the tapering free end part of each knife has a rounded point connecting the first edge and the second edge of the knife, said point having a cutting edge (7) which is integrated with the first cutting edge (6), and **in that** the first edge is at an angle to a section of the second edge which guides the knife along a bone surface during the cutting operation so that the knife assumes an inclined position in relation to the bone surface when said section guides along the bone surface during the cutting operation with the point of the tapering free end part in front and with the section of the first edge nearest to said point being closest to the bone surface.

2. Tool according to Claim 1, **characterised in that** the second edge of the knife has a second cutting edge (8), and the first cutting edge (6), the cutting edge (7) of the rounded point, and the second cutting edge (8) are integrated with each other.

3. Tool according to Claim 1, **characterised in that** the angle between the first edge and the second edge or a tangent to the middle section of said edge is larger than 30° and smaller than 60°.

4. Tool according to Claim 1, **characterised in that** the knives (2) are substantially plane on one side in the half (10) closest to the first edge.

5. Tool according to Claim 4, **characterised in that** the knives (2) are substantially plane on the half (11) that is furthest away from the first edge, the planes forming an inter-angle which is larger than 170° and smaller than 180°.

6. Tool according to Claim 1, **characterised in that** the knives have a substantially rectilinear groove (12) at a distance of between 50 and 100 mm from the second edge.

7. Tool according to Claim 1, **characterised in that** the knives (2) are at a distance to each other of between 5 and 14 mm, preferably between 6 and 10 mm.

8. Knife (2) for automatic cutting along spinous processes in a carcass or part of a carcass, comprising a fixing part (4) for mounting of the knife on a knife holder (1,3) or a console in a machine, and a free cutting part (5) for cutting along the spinous processes, said cutting part of the knife having a cutting edge (6) along a first edge of the knife and a tapering free end part with a second edge, **characterised in that** the tapering free end part has a rounded point connecting the first edge and the second edge, said point having a cutting edge (7) which is integrated with the first cutting edge (6), and **in that** the first edge is at an angle to a section of the second edge which guides the knife along a bone surface during the cutting operation so that the knife assumes an inclined position in relation to the bone surface when said section guides along the bone surface during the cutting operation with the point of the tapering free end part in front and with the section of the first edge nearest to said point being closest to the bone surface.

9. Knife according to Claim 8, **characterised in that** the second edge of the knife has a second cutting edge (8), and the cutting edge (7) of the rounded point and the second cutting edge (8) are integrated with each other.

10. Method for automatic cutting along spinous processes in a carcass or part of a carcass by means of a tool having two knives (2) placed at a distance to each other, said two knives each comprising a fixing part (4) for mounting of the knife on a knife holder (1,3) or a console in a machine, and a free cutting part (5) designed with a cutting edge (6) along a first edge of the knife and having a tapering free end part with a second edge, whereby the tool is moved with said knives on either side of a line of spinous processes, **characterised in that** the tool is moved with the knives in an inclined position with a section of the second edge guiding along a bone surface, with the point of the tapering free end part in front and with the section of the first edge nearest to said point being closest to the bone surface and the section of the first edge furthest from the point being furthest from the bone surface.

11. Method according to Claim 10, **characterised in that** the tool, comprising two knives each having an angle between the first edge and the second edge or a tangent to the middle section of said edge which is larger than 30° and smaller than 60°, is moved so that the second edge of each knife or a tangent to the middle section of said edge is substantially parallel to the longitudinal direction of the spinal column.

12. Method according to Claim 10, **characterised in that** the tool with the knives (2) is moved from the tail area of the carcass to the neck area cutting on both sides of the spinous processes substantially in the full length of the spinal column.

13. Method according to Claim 10, **characterised in that** the tool, comprising two knives (2) each having a second cutting edge (8) along the second edge, is moved substantially at right angles to the spinal column of the carcass until it stops when the second cutting edge (8) hits the spinal column, and **in that** the knives are pressed against the spinal column while the tool is moved along the spinal column during the cutting operation along the spinous processes.

## Patentansprüche

1. Werkzeug zum automatischen Schneiden entlang Dornfortsätzen in einer Karkasse oder einem Teil einer Karkasse, umfassend zwei Messer (2), die in einem Abstand zueinander plaziert sind, wobei die Messer ein Befestigungsteil (4) zum Anbringen der Messer an einem Messerhalter (1, 3) oder einer Konsole in einer Maschine aufweisen, und ein freies Schneidteil (5) zum Schneiden entlang den Dornfortsätzen, wobei das Schneidteil der Messer eine Schneidkante (6) entlang einer ersten Kante der Messer und ein sich verjüngendes freies Endteil mit einer zweiten Kante aufweist, **dadurch gekennzeichnet, daß** das sich verjüngende freie Endteil jedes Messers eine gerundete Spitze aufweist, die die erste Kante und die zweite Kante des Messers verbindet, wobei die Spitze eine Schneidkante (7) aufweist, die mit der ersten Schneidkante (6) integriert ist, und daß die erste Kante in einem Winkel zu einem Abschnitt der zweiten Kante liegt, der das Messer während des Schneidvorganges entlang einer Knochenoberfläche führt, so daß das Messer im Verhältnis zur Knochenoberfläche eine geneigte Position annimmt, wenn der Abschnitt während des Schneidvorgangs entlang der Knochenoberfläche geführt wird, wobei die Spitze des sich verjüngenden freien Endteils vorne und der der Spitze am nächsten liegende Abschnitt der ersten Kante der Knochenoberfläche am nächsten ist.

2. Werkzeug gemäß Anspruch 1, **dadurch gekennzeichnet, daß** die zweite Kante des Messers eine zweite Schneidkante (8) aufweist und die erste Schneidkante (6), die Schneidkante (7) der gerundeten Spitze und die zweite Schneidkante (8) miteinander integriert sind.

3. Werkzeug gemäß Anspruch 1, **dadurch gekennzeichnet, daß** der Winkel zwischen der ersten Kante und der zweiten Kante oder einer Tangente zum Mittelabschnitt dieser Kante größer als 30° und kleiner als 60° ist.

4. Werkzeug gemäß Anspruch 1, **dadurch gekennzeichnet, daß** die Messer (2) auf einer Seite in der Hälfte (10), die der ersten Kante am nächsten liegt, im wesentlichen eben sind.

5. Werkzeug gemäß Anspruch 4, **dadurch gekennzeichnet, daß** die Messer (2) auf der Hälfte (11), die von der ersten Kante am weitesteten entfernt ist, im wesentlichen eben sind, wobei die Ebenen einen Winkel bilden, der größer als 170° und kleiner als 180° ist.

6. Werkzeug gemäß Anspruch 1, **dadurch gekennzeichnet, daß** die Messer eine im wesentlichen geradlinige Furche (12) in einem Abstand von zwischen 50 und 100 mm von der zweiten Kante aufweisen.

7. Werkzeug gemäß Anspruch 1, **dadurch gekennzeichnet, daß** die Messer (2) sich in einem Abstand von zwischen 5 und 14 mm, bevorzugt zwischen 6 und 10 mm, zueinander befinden.

8. Messer (2) zum automatischen Schneiden entlang Dornfortsätzen in einer Karkasse oder einem Teil einer Karkasse, umfassend ein Befestigungsteil (4) zum Anbringen des Messers an einem Messerhalter (1, 3) oder einer Konsole in einer Maschine und ein freies Schneidteil (5) zum Schneiden entlang der Dornfortsätze, wobei das Schneidteil des Messers eine Schneidkante (6) entlang einer ersten Kante des Messers und ein sich verjüngendes freies Endteil mit einer zweiten Kante aufweist, **dadurch gekennzeichnet, daß** das sich verjüngende freie Endteil eine gerundete Spitze aufweist, die die erste Kante und die zweite Kante verbindet, wobei die Spitze eine Schneidkante (7) aufweist, die mit der ersten Schneidkante (6) integriert ist, und daß die erste Kante in einem Winkel zu einem Abschnitt der zweiten Kante liegt, der das Messer während des Schneidvorganges entlang einer Knochenoberfläche führt, so daß das Messer im Verhältnis zur Knochenoberfläche eine geneigte Position annimmt, wenn der Abschnitt während des Schneidvorgangs entlang der Knochenoberfläche geführt wird, wobei die Spitze des sich verjüngenden freien Endteils vorne und der der Spitze am nächsten liegende Abschnitt der ersten Kante der Knochenoberfläche am nächsten ist.

9. Messer nach Anspruch 8, **dadurch gekennzeichnet, daß** die zweite Kante des Messers eine zweite Schneidkante (8) aufweist und die Schneidkante (7) der gerundeten Spitze und die zweite Schneidkante (8) miteinander integriert sind.

10. Verfahren zum automatischen Schneiden entlang Dornfortsätzen in einer Karkasse oder einem Teil einer Karkasse mittels eines Werkzeugs mit zwei Messern (2), die im Abstand zueinander plaziert sind, wobei die Messer je ein Befestigungsteil (4) zum Anbringen des Messers an einem Messerhalter (1, 3) oder einer Konsole in einer Maschine und ein freies Schneidteil (5) aufweisen, das mit einer Schneidkante (6) entlang einer ersten Kante des Messers versehen ist und ein sich verjüngendes freies Endteil mit einer zweiten Kante aufweist, wodurch das Werkzeug mit den Messer auf beiden Seiten einer Linie von Dornfortsätzen bewegt wird, **dadurch gekennzeichnet, daß** das Werkzeug mit den Messern in einer geneigten Position bewegt wird, wobei ein Abschnitt der zweiten Kante entlang der Knochenoberfläche geführt wird, wobei die Spitze des sich verjüngenden freien Endteils vorne und der Abschnitt der ersten Kante, der der Spitze am nächsten ist, der Knochenoberfläche am nächsten ist und der Abschnitt der ersten Kante, der von der Spitze am weitesten entfernt ist, von der Knochenoberfläche am weitesten entfernt ist.

11. Verfahren nach Anspruch 10, **dadurch gekennzeichnet, daß** das Werkzeug, das zwei Messer umfaßt, von denen jedes einen Winkel zwischen der ersten Kante und der zweiten Kante oder einer Tangente zum Mittelabschnitt dieser Kante aufweist, der größer als 30° und kleiner als 60° ist, so bewegt wird, daß die zweite Kante jedes Messers oder eine Tangente zum Mittelabschnitt dieser Kante im wesentlichen parallel zur Längsrichtung der Wirbelsäule ist.

12. Verfahren nach Anspruch 10, **dadurch gekennzeichnet, daß** das Werkzeug mit den Messern (2) aus dem Schwanzbereich der Karkasse zum Halsbereich bewegt wird, wobei es auf beiden Seiten der Dornfortsätze im wesentlichen in der vollen Länge der Wirbelsäule schneidet.

13. Verfahren nach Anspruch 10, **dadurch gekennzeichnet, daß** das Werkzeug, das zwei Messer (2) umfaßt, von denen jedes eine zweite Schneidkante (8) entlang der zweiten Kante aufweist, im wesentlichen im rechten Winkel zur Wirbelsäule der Karkasse bewegt wird, bis es anhält, wenn die zweite Schneidkante (8) die Wirbelsäule trifft, und daß die Messer gegen die Wirbelsäule gepreßt werden, während das Werkzeug während des Schneidvorgangs entlang der Dornfortsätze entlang der Wirbelsäule bewegt wird.

## Revendications

1. Outil de découpe automatique suivant des apophyses vertébrales sur une carcasse ou partie d'une carcasse, comprenant deux couteaux (2) placés à une certaine distance l'un de l'autre, lesdits couteaux comportant une partie de fixation (4) destinée à assurer le montage des couteaux sur un porte-couteau (1, 3) ou une console sur une machine, et une partie libre de coupe (5) destinée à découper suivant des apophyses vertébrales, ladite partie de coupe des couteaux présentant une arête tranchante (6) le long d'un premier bord des couteaux et une partie d'extrémité libre inclinée avec un second bord, **caractérisé en ce que** la partie d'extrémité libre inclinée de chaque couteau présente une partie arrondie reliant le premier bord et le second bord du couteau, ladite pointe comportant une arête tranchante (7) qui est continue avec la première arête tranchante (6), et **en ce que** le premier bord forme un certain angle par rapport à une section du second bord qui guide le couteau le long d'une surface d'os au cours de l'opération de découpe, de telle sorte que le couteau prend une position inclinée par rapport à la surface d'os lorsque ladite section assure le guidage le long de la surface d'os au cours de l'opération de découpe, la pointe de la partie d'extrémité libre inclinée étant située à l'avant et la section du premier bord la plus proche de ladite pointe étant située à proximité de la surface d'os.

2. Outil selon la revendication 1, **caractérisé en ce que** le second bord du couteau présente une deuxième arête tranchante (8), et **en ce que** la première arête tranchante (6), l'arête tranchante (7) de la partie arrondie et la deuxième arête tranchante (8) sont continues les unes par rapport aux autres.

3. Outil selon la revendication 1, **caractérisé en ce que** l'angle entre le premier bord et le second bord ou une tangente à la section centrale dudit bord est supérieur à 30° et inférieur à 60°.

4. Outil selon la revendication 1, **caractérisé en ce que** les couteaux (2) sont sensiblement plans sur une face de la moitié (10) la plus proche du premier bord.

5. Outil selon la revendication 4, **caractérisé en ce que** les couteaux (2) sont sensiblement plans sur la moitié (11) qui est la plus éloignée du premier bord, les plans formant entre eux un angle qui est supérieur à 170° et inférieur à 180°.

6. Outil selon la revendication 1, **caractérisé en ce que** les couteaux présentent une rainure (12) sensiblement rectiligne à une distance comprise entre 50 et 100 mm par rapport au second bord.

7. Outil selon la revendication 1, **caractérisé en ce que** les couteaux (2) sont placés, l'un par rapport à l'autre, à une distance comprise entre 5 et 14 mm, de préférence, entre 6 et 10 mm.

8. Couteau (2) destiné à assurer la découpe automatique suivant des apophyses vertébrales sur une carcasse ou partie d'une carcasse, comprenant une partie de fixation (4) destinée au montage du couteau sur un porte-couteau (1, 3) ou une console sur une machine, et une partie libre de coupe (5) destinée à découper suivant les apophyses vertébrales, ladite partie de coupe du couteau présentant une arête tranchante (6) le long d'un premier bord du couteau et une partie d'extrémité libre inclinée avec un second bord, **caractérisé en ce que** la partie d'extrémité libre inclinée présente une partie arrondie reliant le premier bord et le second bord du couteau, ladite pointe comportant une arête tranchante (7) qui est continue avec la première arête tranchante (6), et **en ce que** le premier bord forme un certain angle par rapport à une section du second bord qui guide le couteau le long d'une surface d'os au cours de l'opération de découpe, de telle sorte que le couteau prend une position inclinée par rapport à la surface d'os lorsque ladite section assure le guidage le long de la surface d'os au cours de l'opération de découpe, la pointe de la partie d'extrémité libre inclinée étant située à l'avant et la section du premier bord la plus proche de ladite pointe étant située à proximité de la surface d'os.

9. Couteau selon la revendication 8, **caractérisé en ce que** le second bord du couteau présente une deuxième arête tranchante (8), et **en ce que** l'arête tranchante (7) de la pointe et la deuxième arête tranchante (8) sont continues l'une par rapport à l'autre.

10. Procédé de découpe automatique suivant les apophyses vertébrales sur une carcasse ou partie d'une carcasse au moyen d'un outil comportant deux couteaux (2) placés à une certaine distance l'un de l'autre, lesdits deux couteaux comprenant chacun une partie de fixation (4) destinée au montage du couteau sur un porte-couteau (1, 3) ou une console dans une machine, et une partie libre de coupe (5) formée avec une arête tranchante (6) le long d'un premier bord du couteau et présentant une partie d'extrémité libre inclinée avec un second bord, de telle sorte que l'outil est déplacé avec lesdits couteaux des deux côtés d'une ligne d'apophyses vertébrales, **caractérisé en ce que** l'outil est déplacé avec les couteaux dans une position inclinée, une section du second bord assurant le guidage le long d'une surface d'os, la pointe de la partie d'extrémité libre inclinée étant située à l'avant et la section du premier bord la plus proche de ladite pointe étant située à proximité de la surface d'os et la section du premier bord la plus éloignée de la pointe étant la plus éloignée de la surface d'os.

11. Procédé selon la revendication 10, **caractérisé en ce que** l'outil, comprenant deux couteaux, présentant chacun un angle entre le premier bord et le second bord, ou une tangente à la section centrale dudit bord, qui est supérieur à 30° et inférieur à 60°, est déplacé de telle sorte que le second bord de chaque couteau, ou une tangente à la section centrale dudit bord, est sensiblement parallèle à la direction longitudinale de la colonne vertébrale.

12. Procédé selon la revendication 10, **caractérisé en ce que** l'outil avec les couteaux (2) est déplacé à partir de la zone de queue de la carcasse vers la zone de cou, assurant la découpe des deux côtés des apophyses vertébrales sensiblement sur la totalité de la longueur de la colonne vertébrale.

13. Procédé selon la revendication 10, **caractérisé en ce que** l'outil, comprenant deux couteaux (2) présentant chacun une deuxième arête tranchante (8) le long du second bord est déplacé sensiblement à angle droit vers la colonne vertébrale de la carcasse jusqu'à ce qu'il s'arrête lorsque la deuxième arête tranchante (8) heurte la colonne vertébrale, et **en ce que** les couteaux sont appliqués contre la colonne vertébrale alors que l'outil est déplacé le long de la colonne vertébrale au cours de l'opération de découpe suivant les apophyses vertébrales.
